# EUROPEAN PATENT APPLICATION

(11) **EP 4 351 118 A1**
(43) Date of publication of application: **10.04.2024**
(21) Application number: 22848563.7
(22) Date of filing: 27.07.2022
(51) Int. Cl.: H04M 1/725, G06F 21/44

(54) **ELECTRONIC DEVICE CONTROL METHOD AND RELATED DEVICE**

(30) Priority: 28.07.2021 CN 202110857595
(71) Applicant: Huawei Technologies Co., Ltd., Shenzhen, Guangdong 518129 (CN)
(72) Inventor: CHEN, Xiaodong, Shenzhen, Guangdong 518129 (CN); YE, Xiaozhen, Shenzhen, Guangdong 518129 (CN); LI, Changting, Shenzhen, Guangdong 518129 (CN); DAI, Zili, Shenzhen, Guangdong 518129 (CN); LIU, Lijian, Shenzhen, Guangdong 518129 (CN)
(74) Representative: Pfenning, Meinig & Partner mbB
(86) International application number: PCT/CN2022/108133
(87) International publication number: WO 2023/005958

(57) **Abstract**

This application provides an electronic device control method and a related device, applied to a system including a first electronic device and a second electronic device. The method includes: when the first electronic device is in a locked state, detecting whether the first electronic device establishes a short-range wireless communication connection to the second electronic device, and whether an intelligent unlocking use condition is met; if the first electronic device establishes the short-range wireless communication connection to the second electronic device, and the intelligent unlocking use condition is met, unlocking the first electronic device by using the second electronic device; detecting whether an intelligent locking use condition is met; and if the intelligent locking use condition is met, locking the first electronic device. In this application, security of intelligent unlocking can be improved.

## Description

This application claims priority to Chinese Patent Application No. 202110857595.2, filed with the China National Intellectual Property Administration on July 28, 2021 and entitled "ELECTRONIC DEVICE CONTROL METHOD AND RELATED DEVICE", which is incorporated herein by reference in its entirety.

### TECHNICAL FIELD

This application relates to the field of terminal technologies, and in particular, to an electronic device control method and a related device.

### BACKGROUND

To improve unlocking experience of an electronic device like a mobile phone or a tablet, an intelligent unlocking function is introduced to the electronic device. A wearable device, a speaker, a headset, or the like may be set as an unlocking device of the electronic device. When the unlocking device is connected to the electronic device, the electronic device can be unlocked without a password, a fingerprint, or face-based identity authentication. However, in some scenarios, intelligent unlocking brings some security risks. For example, if the electronic device is maliciously taken away and intelligently unlocked, information about the owner may be easily leaked or rights of the owner may be damaged.

### SUMMARY

Embodiments of this application disclose an electronic device control method and a related device, to improve security of intelligent unlocking of an electronic device.

A first aspect of this application discloses an electronic device control method, applied to a system including a first electronic device and a second electronic device. The method includes: when the first electronic device is in a locked state, detecting whether the first electronic device establishes a short-range wireless communication connection to the second electronic device, and whether an intelligent unlocking use condition is met; if the first electronic device establishes the short-range wireless communication connection to the second electronic device, and the intelligent unlocking use condition is met, unlocking the first electronic device by using the second electronic device; detecting whether an intelligent locking use condition is met; and if the intelligent locking use condition is met, locking the first electronic device.

According to the electronic device control method provided in this embodiment of this application, when the second electronic device is connected (for example, connected through Bluetooth) to the first electronic device and meets the intelligent unlocking use condition, intelligent unlocking is performed on the first electronic device. After intelligent unlocking is performed on the first electronic device, if the intelligent locking use condition is met, intelligent locking is performed on the first electronic device. According to the electronic device control method provided in this embodiment of this application, security of intelligent unlocking can be improved, and a security risk caused by intelligent unlocking in a non-secure use scenario can be avoided.

In some optional implementations, the method further includes: if a first user operation is received, displaying an intelligent unlocking and/or intelligent locking setting interface, where the intelligent unlocking and/or intelligent locking setting interface is used to set an intelligent unlocking and/or intelligent locking function of the first electronic device.

In some optional implementations, the method further includes: if a second user operation on the intelligent unlocking and/or intelligent locking setting interface is received, displaying an intelligent unlocking and/or intelligent locking use condition setting interface, where the intelligent unlocking and/or intelligent locking use condition setting interface is used to set the intelligent unlocking use condition and/or the intelligent locking use condition.

In some optional implementations, the intelligent unlocking use condition and the intelligent locking use condition correspond to a same condition option.

In some optional implementations, the intelligent unlocking use condition and the intelligent locking use condition correspond to different condition options.

In some optional implementations, the locking the first electronic device is specifically: locking the first electronic device by using the second electronic device; or locking, by the first electronic device, the first electronic device.

In some optional implementations, the first electronic device and the second electronic device are terminals.

In some optional implementations, the first electronic device is a mobile phone or a tablet, and the second electronic device is a wearable device.

In some optional implementations, the detecting whether an intelligent locking use condition is met is specifically: before the first electronic device is screen-off, detecting whether the intelligent locking use condition is met.

In some optional implementations, the intelligent unlocking use condition includes any one or more of the following: short-range wireless communication signal strength of the first electronic device and/or the second electronic device, a wearing status of the second electronic device, the second electronic device having been unlocked and password-protected, a distance between the first electronic device and the second electronic device, and a speed, atmospheric pressure, a heart rate, ambient brightness, and an ambient sound sensed by the first electronic device and/or the second electronic device. The intelligent unlocking use condition includes any one or more of the following: a connection status of short-range wireless communication between the first electronic device and the second electronic device, short-range wireless communication signal strength of the first electronic device and/or the second electronic device, a wearing status of an unlocking device of the second electronic device, a distance between the first electronic device and the second electronic device, and a speed, atmospheric pressure, a heart rate, ambient brightness, and an ambient sound sensed by the first electronic device and/or the second electronic device.

In some optional implementations, the first electronic device is a vehicle, the second electronic device is a terminal, and the unlocking the first electronic device is specifically: unlocking a door of the vehicle. The locking the first electronic device is specifically: locking the door.

In some optional implementations, the intelligent unlocking use condition includes any one or more of the following: short-range wireless communication signal strength of the vehicle and/or the terminal, a wearing status of the terminal, the terminal having been unlocked and password-protected, a distance between the vehicle and the terminal, and a speed of the vehicle. The intelligent locking use condition includes any one or more of the following: a connection status of short-range wireless communication between the vehicle and the terminal, short-range wireless communication signal strength of the vehicle and/or the terminal, a wearing status of the terminal, a distance between the vehicle and the terminal, and a speed of the vehicle.

A second aspect of this application discloses an electronic device control method, applied to a first electronic device. The method includes: when the first electronic device is in a locked state, detecting whether the first electronic device establishes a short-range wireless communication connection to a second electronic device, and whether an intelligent unlocking use condition is met; if the first electronic device establishes the short-range wireless communication connection to the second electronic device, and the intelligent unlocking use condition is met, unlocking the first electronic device by using the second electronic device; detecting whether an intelligent locking use condition is met; and if the intelligent locking use condition is met, locking the first electronic device.

A third aspect of this application discloses an electronic device control method, applied to a second electronic device. The second electronic device is an unlocking device of a first electronic device. The method includes: after the first electronic device enters a locked state and establishes a short-range wireless communication connection to the first electronic device, returning first device information of the second electronic device to the first electronic device, to detect whether the first electronic device meets an intelligent unlocking use condition, and when the first electronic device establishes the short-range wireless communication connection to the second electronic device and meets the intelligent unlocking use condition, performing intelligent unlocking on the first electronic device by using the second electronic device; and after intelligent unlocking is performed on the first electronic device, returning second device information of the second electronic device to the first electronic device, to detect whether detection of an intelligent locking use condition is met, and when the first electronic device meets the intelligent locking use condition, performing intelligent locking on the first electronic device.

In some optional implementations, the first device information and the second device information include any one or more of the following: short-range wireless communication signal strength of the first electronic device and/or the second electronic device, a wearing status of the second electronic device, whether the second electronic device is unlocked and whether the second electronic device is password-protected, a distance between the first electronic device and the second electronic device, and a speed, atmospheric pressure, a heart rate, ambient brightness, and an ambient sound sensed by the second electronic device.

In some optional implementations, before the performing intelligent unlocking on the first electronic device, the method further includes: sending an information prompt for determining whether to intelligently unlock the first electronic device.

In some optional implementations, after the performing intelligent unlocking on the first electronic device, the method further includes: sending an information prompt for determining whether to cancel intelligent unlocking of the first electronic device.

In some optional implementations, before the performing intelligent locking on the first electronic device, the method further includes: sending an information prompt for determining whether to intelligently lock the first electronic device.

In some optional implementations, after the performing intelligent locking on the first electronic device, the method further includes: sending an information prompt for determining whether to cancel intelligent locking of the first electronic device.

A fourth aspect of this application discloses a computer-readable storage medium. The computer-readable storage medium includes computer instructions, and when the computer instructions are run on an electronic device, the electronic device is enabled to perform the electronic device control method according to the first aspect or the second aspect.

A fifth aspect of this application discloses an electronic device. The electronic device includes a processor and a memory, the memory is configured to store instructions, and the processor is configured to invoke the instructions in the memory, so that the electronic device is enabled to perform the electronic device control method according to the first aspect, the second aspect, or the third aspect.

A sixth aspect of this application discloses a chip system. The chip system is used in an electronic device. The chip system includes an interface circuit and a processor. The interface circuit and the processor are interconnected through a line. The interface circuit is configured to receive a signal from a memory of the electronic device, and send a signal to the processor, where the signal includes computer instructions stored in the memory. When the processor executes the computer instructions, the chip system performs the electronic device control method according to the first aspect, the second aspect, or the third aspect.

A seventh aspect of this application discloses a computer program product. When the computer program product runs on a computer, the computer is enabled to perform the electronic device control method according to the first aspect, the second aspect, or the third aspect.

An eighth aspect of this application discloses an apparatus. The apparatus has a function of implementing behavior of the electronic device in the method provided in the first aspect, the second aspect, or the third aspect. The function may be implemented by hardware, or may be implemented by executing corresponding software by hardware. The hardware or software includes one or more modules corresponding to the foregoing functions.

It should be understood that the computer-readable storage medium according to the fourth aspect, the electronic device according to the fifth aspect, the chip system according to the sixth aspect, the computer program product according to the seventh aspect, and the apparatus according to the eighth aspect all correspond to the method according to the first aspect, the second aspect, or the third aspect. Therefore, for beneficial effects that can be achieved by the computer-readable storage medium according to the fourth aspect, the electronic device according to the fifth aspect, the chip system according to the sixth aspect, the computer program product according to the seventh aspect, and the apparatus according to the eighth aspect, refer to the beneficial effects in the corresponding method provided above. Details are not described herein again.

### BRIEF DESCRIPTION OF DRAWINGS

FIG. 1 is a schematic diagram of an application scenario of an electronic device control method according to an embodiment of this application;
FIG. 2 is a flowchart of an electronic device control method according to an embodiment of this application;
FIG. 3A to FIG. 3C are a schematic diagram of entering an intelligent unlocking and locking setting interface;
FIG. 4 is a schematic diagram of an intelligent unlocking and locking setting interface;
FIG. 5 is a schematic diagram of an intelligent unlocking and locking use condition setting interface;
FIG. 6 is a schematic diagram in which before intelligent unlocking of a mobile phone, a smartwatch sends an information prompt for determining whether to intelligently unlock the mobile phone;
FIG. 7 is a schematic diagram in which after intelligent unlocking of a mobile phone, a smartwatch sends an information prompt for determining whether to cancel intelligent unlocking;
FIG. 8 is a schematic diagram in which before intelligent locking is performed on a mobile phone, a smartwatch sends an information prompt for determining whether to intelligently lock the mobile phone;
FIG. 9 is a schematic diagram in which after intelligent locking is performed on a mobile phone, a smartwatch sends an information prompt for determining whether to cancel intelligent locking;
FIG. 10 is a detailed flowchart in which a mobile phone detects whether an intelligent unlocking/intelligent locking use condition is met (203/205 in FIG. 2);
FIG. 11 is a schematic diagram of an application scenario of an electronic device control method according to another embodiment of this application;
FIG. 12 is a flowchart of an electronic device control method according to another embodiment of this application; and
FIG. 13 is a schematic diagram of a structure of an electronic device according to an embodiment of this application.

### DESCRIPTION OF EMBODIMENTS

For ease of understanding, descriptions of some concepts related to embodiments of this application are provided as examples for reference, as shown in the following:

It should be noted that in this application, "at least one" means one or more, and "a plurality of' means two or more. "And/or" describes an association relationship between associated objects, and represents that three relationships may exist. For example, A and/or B may represent the following cases: Only A exists, both A and B exist, and only B exists, where A and B may be singular or plural. In the specification, claims, and accompanying drawings of this application, the terms "first", "second", "third", "fourth", and so on (if existent) are intended to distinguish between similar objects but are not intended to describe a specific order or sequence.

To better understand an electronic device control method and a related device provided in embodiments of this application, an application scenario of the electronic device control method in this application is first described below.

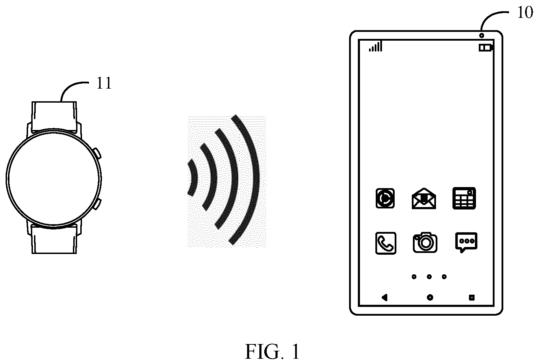

FIG. 1 is a schematic diagram of an application scenario of an electronic device control method according to an embodiment of this application.

The electronic device control method provided in this embodiment of this application is applied to a first electronic device 10 and a second electronic device 11. The first electronic device 10 and the second electronic device 11 may be terminals. In the embodiment shown in FIG. 1, the first electronic device 10 is a mobile phone, and the second electronic device 11 is a smartwatch. In another embodiment of this application, the first electronic device 10 and the second electronic device 11 may be other devices. For example, the first electronic device 10 may be a tablet, and the second electronic device 11 may be a speaker.

The second electronic device 11 is an unlocking device of the first electronic device 10, and is configured to perform intelligent unlocking and intelligent locking on the first electronic device 10. According to the electronic device control method provided in this embodiment of this application, when the second electronic device 11 is connected (for example, connected through Bluetooth) to the first electronic device 10 and meets an intelligent unlocking use condition, intelligent unlocking is performed on the first electronic device 10. After intelligent unlocking is performed on the first electronic device 10, if an intelligent locking use condition is met, intelligent locking is performed on the first electronic device 10. According to the electronic device control method provided in this embodiment of this application, security of intelligent unlocking can be improved, and a security risk caused by intelligent unlocking in a non-secure use scenario (for example, the first electronic device 10 is maliciously taken away) can be avoided.

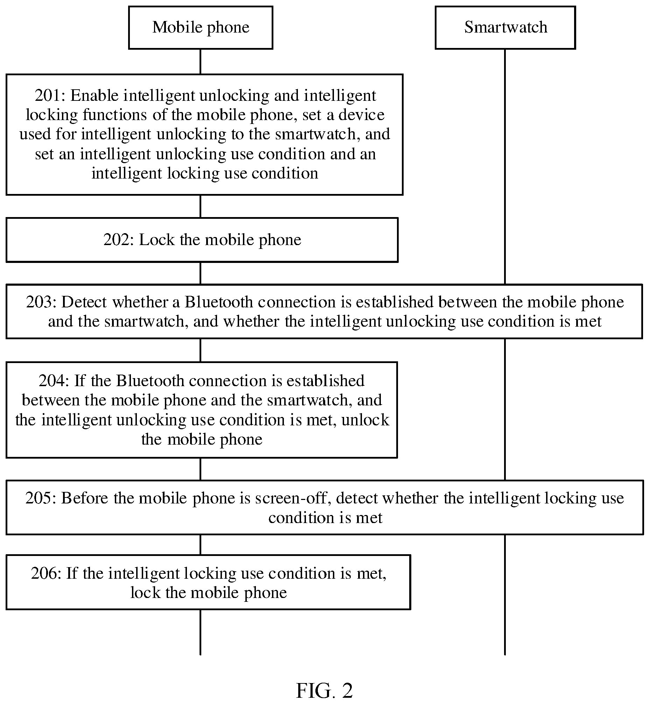

FIG. 2 is a flowchart of an electronic device control method according to an embodiment of this application. The electronic device control method provided in this embodiment of this application is applied to a mobile phone and a smartwatch.

201: The mobile phone enables intelligent unlocking and intelligent locking functions, sets a device used for unlocking (namely, an unlocking device) as the smartwatch, and sets an intelligent unlocking use condition and an intelligent locking use condition.

The mobile phone may enable the intelligent unlocking and intelligent locking functions based on user settings. Alternatively, the mobile phone may detect whether a user is suitable for face and/or fingerprint authentication. When detecting that the user is not suitable for face and/or fingerprint authentication, the mobile phone automatically enables the intelligent unlocking and intelligent locking functions. For example, when it is detected that the user is driving, or no face is detected, or it is detected that the user wears a mask, it is determined that the user is not suitable for face and/or fingerprint authentication, and the mobile phone enables the intelligent unlocking and intelligent locking functions. The mobile phone may detect, by using a distributed technology, whether the user is suitable for face and/or fingerprint authentication.

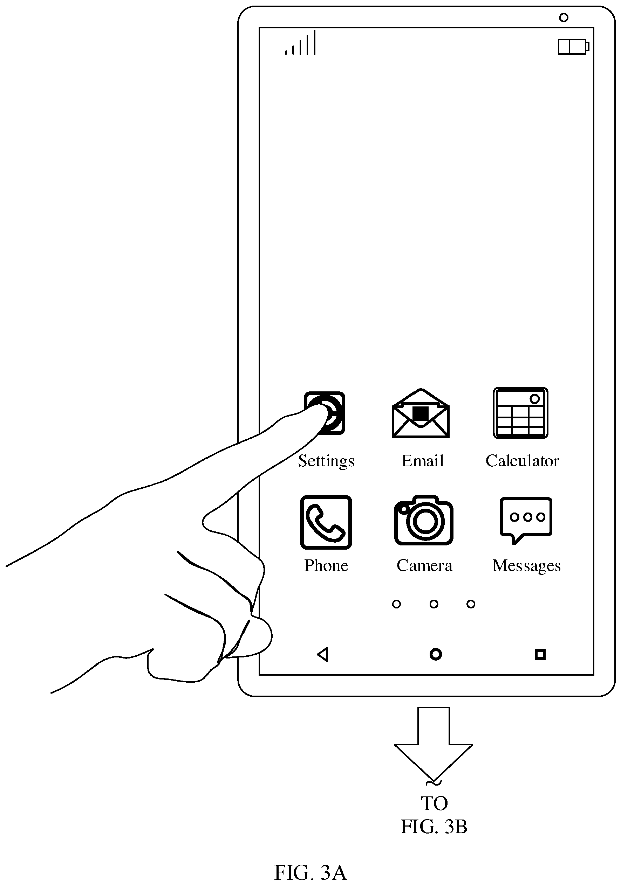

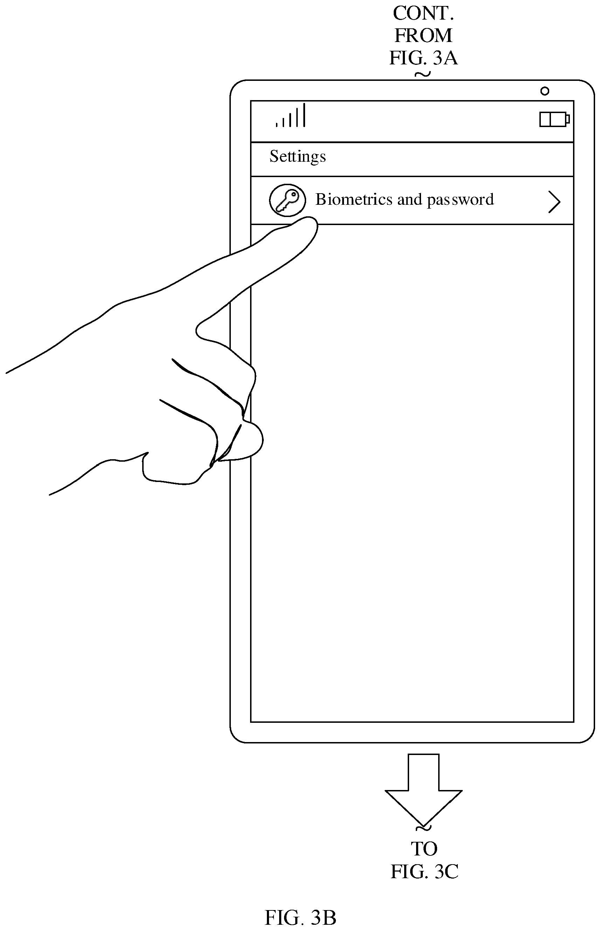

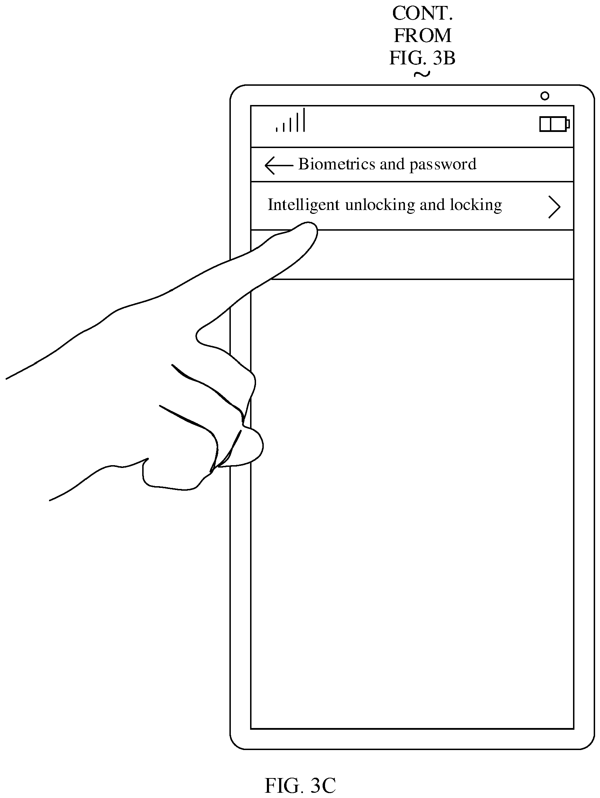

If a first user operation is received, the mobile phone may display an intelligent unlocking and/or intelligent locking setting interface, so as to set an intelligent unlocking and/or intelligent locking function. FIG. 3A to FIG. 3C are a schematic diagram of entering an intelligent unlocking and locking setting interface. As shown in FIG. 3A to FIG. 3C, the user may tap "Settings" -> "Biometrics and password" -> "Intelligent unlocking and locking", to enter the intelligent unlocking and locking setting interface.

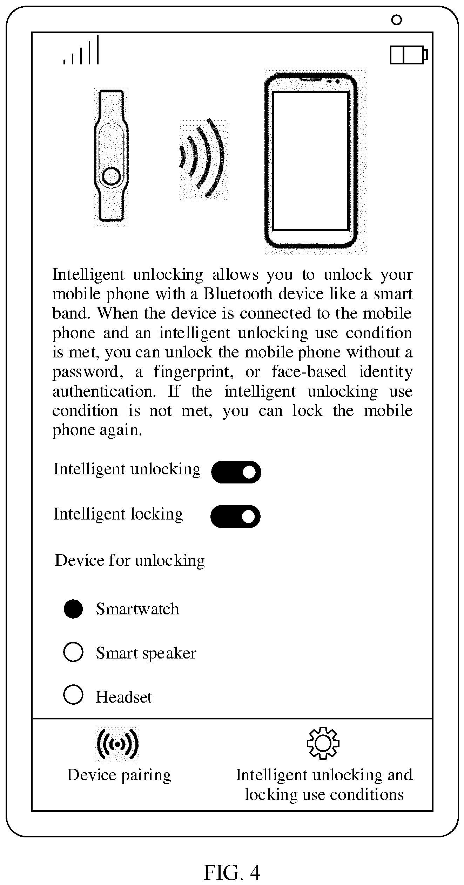

FIG. 4 is a schematic diagram of an intelligent unlocking and locking setting interface. As shown in FIG. 4, the intelligent unlocking and locking setting interface may include an intelligent unlocking switch and an intelligent locking switch. The intelligent unlocking switch is used to enable or disable the intelligent unlocking function, and the intelligent locking is used to enable or disable the intelligent locking function. The intelligent unlocking and locking setting interface may further include an unlocking device option, which is used to set a device used for unlocking. In this embodiment, the device used for unlocking is set as a smartwatch. The intelligent unlocking and locking setting interface may further include a device pairing function option, which is used to search for a connectable device. A found device is added to the unlocking device option. The intelligent unlocking and locking setting interface may further include an intelligent unlocking use condition function option, which is used to set the intelligent unlocking use condition.

If a second user operation on the intelligent unlocking and/or intelligent locking setting interface is received, the mobile phone may display an intelligent unlocking and/or intelligent locking use condition setting interface. The intelligent unlocking and/or intelligent locking use condition setting interface is used to set the intelligent unlocking use condition and/or the intelligent locking use condition.

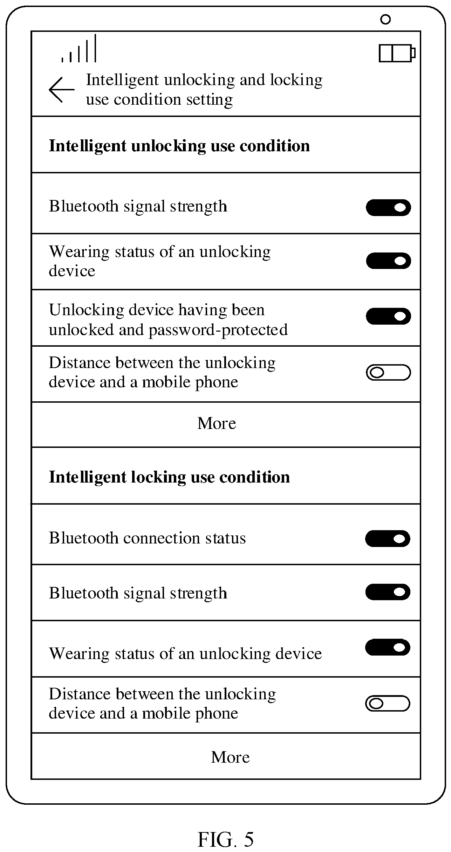

FIG. 5 is a schematic diagram of an intelligent unlocking and locking use condition setting interface. On the intelligent unlocking and locking setting interface, the user may tap an intelligent unlocking and locking use condition function option, to enter the intelligent unlocking and locking use condition setting interface. The intelligent unlocking and locking use condition setting interface may be displayed based on the intelligent unlocking and locking setting interface. For example, if the user enables the intelligent unlocking function on the intelligent unlocking and locking setting interface, the intelligent unlocking and locking use condition setting interface includes an intelligent unlocking use condition option. If the user enables the intelligent unlocking and intelligent locking functions on the intelligent unlocking and locking setting interface, the intelligent unlocking and locking use condition setting interface includes the intelligent unlocking use condition option and an intelligent locking use condition option. As shown in FIG. 5, the intelligent unlocking and locking use condition setting interface includes the intelligent unlocking use condition option and the intelligent locking use condition option. The intelligent unlocking use condition option includes "Bluetooth signal strength", "a wearing status of an unlocking device", "the unlocking device having been unlocked and password-protected", "a distance between the unlocking device and a mobile phone", and the like. Each intelligent unlocking use condition option indicates one intelligent unlocking use condition. One or more intelligent unlocking use conditions may be selected. For example, if one intelligent unlocking use condition option "Bluetooth signal strength" is selected, when the Bluetooth signal strength is greater than or equal to preset strength, the intelligent unlocking use condition is met. If one intelligent unlocking use condition option "a wearing status of an unlocking device" is selected, when the unlocking device (a wearable device) is in a worn state, the intelligent unlocking use condition is met. If one intelligent unlocking use condition option "the unlocking device having been unlocked and password-protected" is selected, when the unlocking device is unlocked and password-protected, the intelligent unlocking use condition is met. If three intelligent unlocking use condition options: "Bluetooth signal strength", "a wearing status of an unlocking device", and "the unlocking device having been unlocked and password-protected" are selected, when the Bluetooth signal strength is greater than or equal to preset strength, the unlocking device (a wearable device) is in a worn state, and the unlocking device is unlocked and password-protected, the intelligent unlocking use condition is met.

In addition to "Bluetooth signal strength", "a wearing status of an unlocking device", "the unlocking device having been unlocked and password-protected", and "a distance between the unlocking device and a mobile phone", the mobile phone may further include another intelligent unlocking use condition option. For example, the mobile phone may further include intelligent unlocking use condition options such as "a sensed speed", "sensed atmospheric pressure", "a sensed heart rate", "sensed ambient brightness", and "a sensed ambient sound". "A sensed speed", "sensed atmospheric pressure", "a sensed heart rate", "sensed ambient brightness", "a sensed ambient sound", or the like may be data sensed by the mobile phone or data sensed by the smartwatch, or may be data sensed by the mobile phone and the smartwatch. For example, if the user selects "a sensed speed", when a speed sensed by the mobile phone and/or the unlocking device is greater than or equal to a preset speed, it indicates that the user is moving. In this case, the intelligent locking use condition is met.

In FIG. 5, the intelligent locking use condition option includes "a Bluetooth connection status", "Bluetooth signal strength", "a wearing status of an unlocking device", "a distance between the unlocking device and a mobile phone", and the like. Each intelligent locking use condition option indicates one intelligent locking use condition. One or more intelligent locking use conditions may be selected. For example, if one intelligent locking use condition option "a Bluetooth connection status" is selected, when a Bluetooth connection between the mobile phone and the smartwatch is disconnected, the intelligent locking use condition is met. If one intelligent locking use condition option "Bluetooth signal strength" is selected, when the Bluetooth signal strength is less than the preset strength, the intelligent locking use condition is met. If one intelligent locking use condition option "a wearing status of an unlocking device" is selected, when the unlocking device is in a non-worn state, the intelligent locking use condition is met. If three intelligent locking use condition options: "a Bluetooth connection status", "Bluetooth signal strength", and "a wearing status of an unlocking device" are selected, when a Bluetooth connection between the mobile phone and the smartwatch is disconnected, the Bluetooth signal strength is less than the preset strength, or the unlocking device is in a non-worn state, the intelligent locking use condition is met.

The intelligent unlocking use condition option and the intelligent locking use condition option may be the same. For example, the intelligent unlocking use condition option and the intelligent locking use condition option may include the Bluetooth signal strength and the wearing status of the unlocking device. When the Bluetooth signal strength is greater than or equal to preset strength, and the unlocking device is in the worn state, the intelligent unlocking use condition is met. When the Bluetooth signal strength is less than preset strength, or the unlocking device is in the non-worn state, the intelligent locking use condition is met. The intelligent unlocking use condition option and the intelligent locking use condition option may alternatively be different. For example, refer to FIG. 5.

In the embodiment shown in FIG. 2, the intelligent unlocking use condition and the intelligent locking use condition may be set. For example, the intelligent unlocking use condition and the intelligent locking use condition may be set on the intelligent unlocking and locking use condition setting interface. In another embodiment of this application, a preset intelligent unlocking use condition and a preset intelligent locking use condition may be used.

202: Lock the mobile phone when a locking condition of the mobile phone is met.

For example, if the user presses a power button of the mobile phone, the mobile phone is locked. Alternatively, if the mobile phone is inactive after a preset time period (for example, the user does not perform an operation on the mobile phone within a preset time period), the mobile phone is locked.

203: Detect whether a Bluetooth connection is established between the mobile phone and the smart watch, and whether the intelligent unlocking use condition is met.

In this embodiment, the mobile phone is connected to the smartwatch through Bluetooth, and the smartwatch intelligently unlocks the mobile phone by establishing the Bluetooth connection to the mobile phone.

In another embodiment of this application, other short-range wireless communication may be performed between the mobile phone and the smartwatch, and the smartwatch intelligently unlocks the mobile phone by establishing the other short-range wireless communication with the mobile phone. For example, short-range wireless communication may be performed between the mobile phone and the smartwatch by using Wi-Fi, near field communication (Near Field Communication, NFC), a ZigBee technology, an infrared data association (Infrared Data Association, IrDA) technology, an ultra-wideband (ultra wideband, UWB) technology, a wireless universal serial bus (Universal Serial Bus, USB), or the like. If the smartwatch intelligently unlocks the mobile phone by using other short-range wireless communication, in this step, whether a corresponding short-range wireless communication connection is established between the mobile phone and the smartwatch is detected.

Data of the mobile phone and/or the smartwatch may be obtained based on the intelligent unlocking use condition that is set in 201, and whether the intelligent unlocking use condition is met may be determined based on the obtained data. FIG. 5 is still used as an example. If one intelligent unlocking use condition option "Bluetooth signal strength" is selected in 201, Bluetooth signal strength of the mobile phone and/or the smartwatch is obtained, to determine whether the obtained Bluetooth signal strength of the mobile phone and/or the smartwatch is greater than or equal to the preset strength. If one intelligent unlocking use condition option "a wearing status of an unlocking device" is selected in 201, wearing information of the smartwatch is obtained, to determine, based on the obtained wearing information of the smartwatch, whether the smartwatch is in the worn state. If one intelligent unlocking use condition option "the unlocking device having been unlocked and password-protected" is selected in 201, a device status of the smartwatch is obtained, to determine, based on the device status of the smartwatch, whether the unlocking device is unlocked and password-protected. If three intelligent unlocking use condition options: "Bluetooth signal strength", "a wearing status of an unlocking device", and "the unlocking device having been unlocked and password-protected" are selected in 201, Bluetooth signal strength of the mobile phone and/or the smartwatch, wearing information of the smartwatch, and a device status of the smartwatch are obtained, to determine whether Bluetooth signal strength of the mobile phone and/or the smartwatch is greater than or equal to the preset strength, determine, based on the wearing information of the smartwatch, whether the smartwatch is in the worn state, and determine, based on the device status of the smartwatch, whether the smartwatch is unlocked and password-protected.

In an embodiment of this application, the smartwatch may detect whether the Bluetooth connection is established between the mobile phone and the smartwatch, and whether the intelligent unlocking use condition is met.

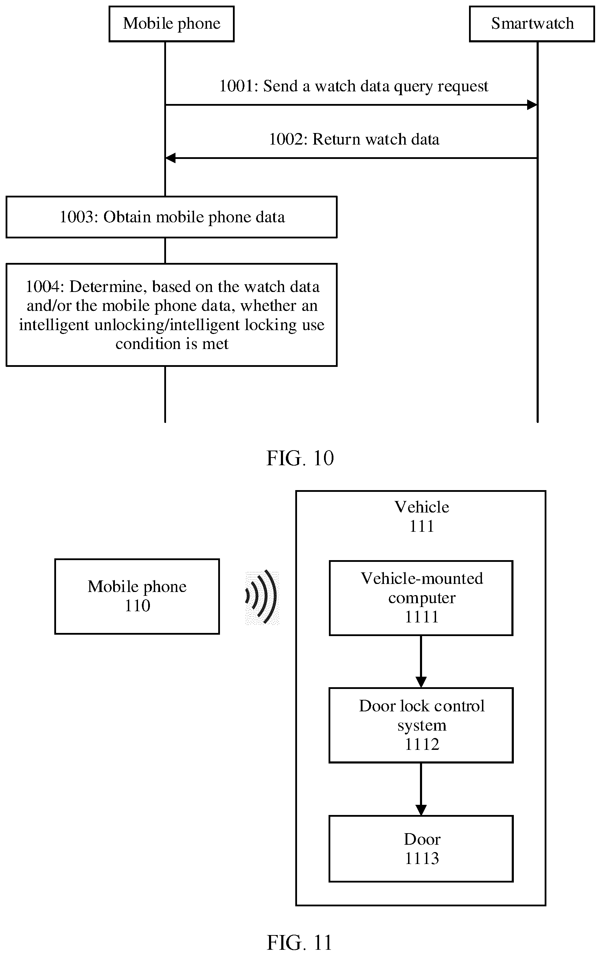

In another embodiment of this application, the mobile phone may detect whether the Bluetooth connection is established between the mobile phone and the smartwatch, and whether the intelligent unlocking use condition is met. For a specific process in which the mobile phone detects whether the intelligent unlocking use condition is met, refer to FIG. 10.

204: If the Bluetooth connection is established between the mobile phone and the smartwatch, and the intelligent unlocking use condition is met, unlock (that is, intelligently unlock) the mobile phone.

FIG. 5 is still used as an example. If one intelligent unlocking use condition option "Bluetooth signal strength" is selected in 201, when the Bluetooth signal strength of the mobile phone and/or the smartwatch is greater than or equal to the preset strength, the intelligent unlocking use condition is met, and the mobile phone is unlocked. If one intelligent unlocking use condition option "a wearing status of an unlocking device" is selected in 201, and it is determined, based on the wearing information of the smartwatch, that the smartwatch is in the worn state, the intelligent unlocking use condition is met, and the mobile phone is unlocked. If one intelligent unlocking use condition option "the unlocking device having been unlocked and password-protected" is selected in 201, and it is determined, based on the device status of the smartwatch, that the smartwatch is unlocked and password-protected, the intelligent unlocking use condition is met, the mobile phone is unlocked. If three intelligent unlocking use condition options: "Bluetooth signal strength", "a wearing status of an unlocking device", and "the unlocking device having been unlocked and password-protected" are selected in 201, it is determined that the Bluetooth signal strength of the mobile phone and/or the smartwatch is greater than or equal to the preset strength, it is determined, based on the wearing information of the smartwatch, that the smartwatch is in the worn state, and it is determined, based on the device status of the smartwatch, that the smartwatch is unlocked and password-protected, the intelligent unlocking use condition is met, and the mobile phone is unlocked.

If the Bluetooth connection is established between the mobile phone and the smartwatch, and the intelligent unlocking use condition is met, the mobile phone may be unlocked by using the smartwatch.

The smartwatch may detect whether the Bluetooth connection is established between the mobile phone and the smartwatch, and whether the intelligent unlocking use condition is met. When it is detected that the Bluetooth connection is established between the mobile phone and the smartwatch, and the intelligent unlocking use condition is met, the smartwatch may send an unlocking instruction to the mobile phone, and the mobile phone unlocks the mobile phone according to the unlocking instruction.

In an embodiment of this application, if the Bluetooth connection is established between the mobile phone and the smartwatch, and the intelligent unlocking use condition is met, before the mobile phone is intelligently unlocked, the smartwatch sends an information prompt for determining whether to intelligently unlock the mobile phone.

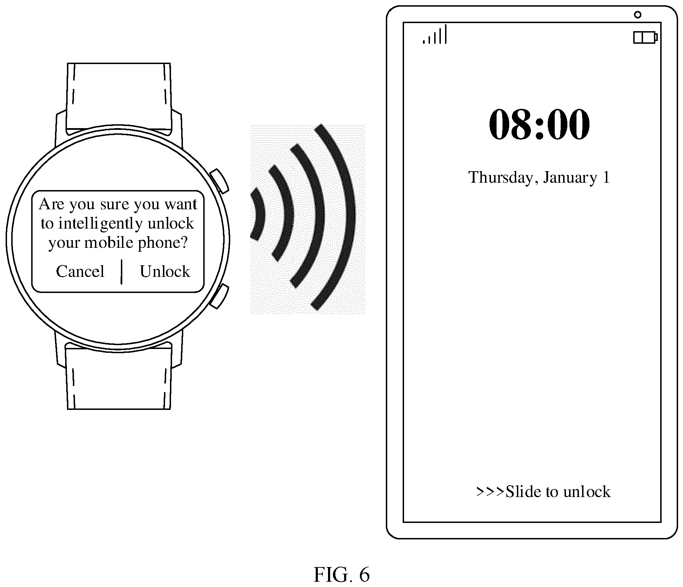

FIG. 6 is a schematic diagram in which before intelligent unlocking of a mobile phone, a smartwatch sends an information prompt for determining whether to intelligently unlock the mobile phone. Refer to FIG. 6. When the Bluetooth connection is established between the mobile phone and the smartwatch, and the intelligent unlocking use condition is met, the smartwatch may display a first prompt interface. The first prompt interface may include prompt information "Are you sure you want to intelligently unlock your mobile phone?", and may further include two options "Cancel" and "Unlock". If the user taps "Unlock", the mobile phone is intelligently unlocked. Otherwise, if the user taps "Cancel", the mobile phone is not intelligently unlocked. Alternatively, the first prompt interface may include an option "Yes". If the user taps "Yes", the mobile phone is intelligently unlocked. Otherwise, if the user does not tap "Yes", the mobile phone is not intelligently unlocked.

In another embodiment of this application, when the Bluetooth connection is established between the mobile phone and the smartwatch, and the intelligent unlocking use condition is met, the mobile phone is unlocked by using the smartwatch, and the smartwatch sends an information prompt for determining whether to cancel intelligent unlocking.

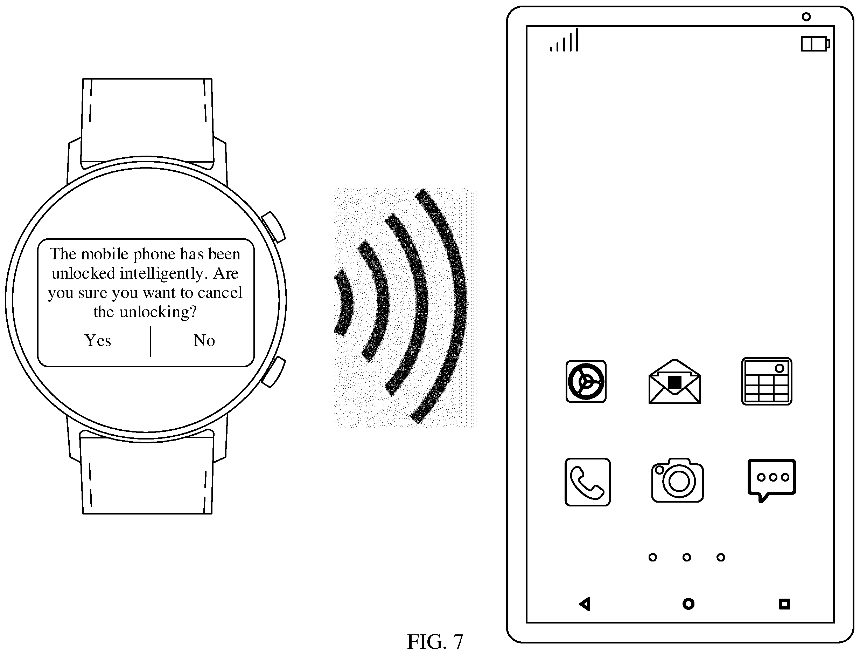

FIG. 7 is a schematic diagram in which after intelligent unlocking of a mobile phone, a smartwatch sends an information prompt for determining whether to cancel intelligent unlocking. Refer to FIG. 7. When the Bluetooth connection is established between the mobile phone and the smartwatch, and the intelligent unlocking use condition is met, the mobile phone is intelligently unlocked, and the smartwatch sends the information prompt for determining whether to cancel intelligent unlocking. After the mobile phone is intelligently unlocked, the smartwatch may display a second prompt interface. The second prompt interface may include prompt information "The mobile phone has been unlocked intelligently. Are you sure you want to cancel the unlocking?", and may further include two options "Yes" and "No". If the user taps "Yes", the intelligent unlocking of the mobile phone is canceled. Otherwise, if the user taps "No", the intelligent unlocking of the mobile phone is maintained. Alternatively, the second prompt interface may include an option "Yes". If the user taps "Yes", the intelligent unlocking of the mobile phone is canceled. Otherwise, if the user does not tap "Yes", the intelligent unlocking of the mobile phone is maintained.

205: Before the mobile phone is screen-off, detect whether the intelligent locking use condition is met.

FIG. 5 is still used as an example. If one intelligent locking use condition option "a Bluetooth connection status" is selected in 201, before the mobile phone is screen-off, the Bluetooth connection status of the mobile phone and the smartwatch is obtained, to determine whether the Bluetooth connection between the mobile phone and the smartwatch is disconnected. If one intelligent locking use condition option "Bluetooth signal strength" is selected in 201, before the mobile phone is screen-off, the Bluetooth signal strength of the mobile phone and/or the smartwatch is obtained, to determine whether the obtained Bluetooth signal strength of the mobile phone and/or the smartwatch is less than the preset strength. If one intelligent locking use condition option "a wearing status of an unlocking device" is selected in 201, before the mobile phone is screen-off, the wearing information of the smartwatch is obtained, to determine, based on the obtained wearing information of the smartwatch, whether the smartwatch is in the non-worn state. If three intelligent locking use condition options: "a Bluetooth connection status", "Bluetooth signal strength", and "a wearing status of an unlocking device" are selected in 201, before the mobile phone is screen-off, the Bluetooth connection status of the mobile phone and the smartwatch, the Bluetooth signal strength of the mobile phone and/or the smartwatch, and the wearing information of the smartwatch are obtained, to determine whether the Bluetooth connection between the mobile phone and the smartwatch is disconnected, whether the Bluetooth signal strength of the mobile phone and/or the smartwatch is less than the preset strength, and whether the smartwatch is in the non-worn state.

That the mobile phone is screen-off means that the mobile phone turns off the screen. If the user does not perform an operation on the mobile phone within a preset time period, the mobile phone may automatically turn off the screen.

In an embodiment of this application, the smartwatch may detect whether the intelligent locking use condition is met.

In another embodiment of this application, the mobile phone may detect whether the intelligent locking use condition is met.

206: If the intelligent locking use condition is met, lock the mobile phone.

FIG. 5 is still used as an example. Three intelligent locking use condition options: "a Bluetooth connection status", "Bluetooth signal strength", and "a wearing status of an unlocking device" are selected in 201. If the Bluetooth connection between the mobile phone and the smartwatch is disconnected, the Bluetooth signal strength of the mobile phone and/or the smartwatch is less than the preset strength, or the smartwatch is in the non-worn state, the intelligent locking use condition is met, and the mobile phone is locked (that is, intelligently locked).

If the intelligent locking use condition is met, the mobile phone may be locked by using the smartwatch.

The smartwatch may detect whether the intelligent locking use condition is met. When it is detected that the intelligent locking use condition is met, the smartwatch may send a locking instruction to the mobile phone, and the mobile phone locks the mobile phone according to the locking instruction.

Alternatively, if the intelligent locking use condition is met, the mobile phone may lock the mobile phone. For example, if the mobile phone detects that the Bluetooth connection between the mobile phone and the smartwatch is disconnected, the mobile phone determines that the intelligent locking use condition is met, and the mobile phone locks the mobile phone.

In an embodiment of this application, if the intelligent locking use condition is met, before intelligent locking is performed on the mobile phone, the smartwatch sends prompt information for determining whether to perform intelligent locking.

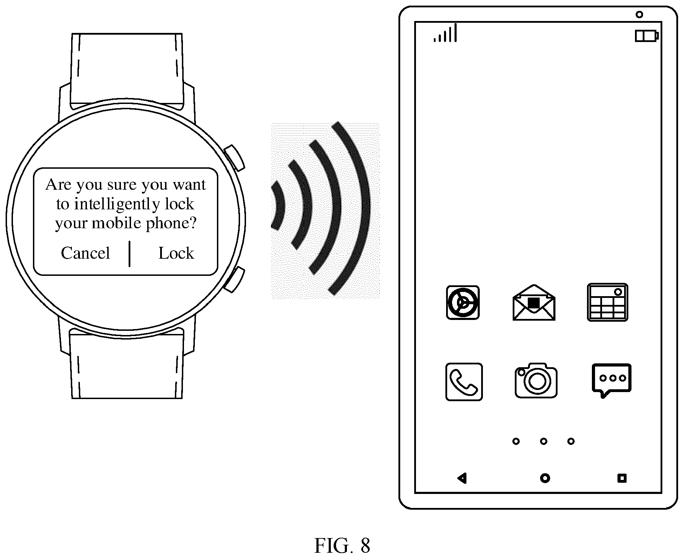

FIG. 8 is a schematic diagram in which before an intelligent locking use condition is met and intelligent locking is performed on a mobile phone, a smartwatch sends an information prompt for determining whether to intelligently lock the mobile phone. Refer to FIG. 8. Before the mobile phone is screen-off, if the intelligent locking use condition is met, the smartwatch may display a third prompt interface. The third prompt interface may include prompt information "Are you sure you want to intelligently lock your mobile phone?", and may further include two options "Cancel" and "Lock". If the user taps "Lock", the mobile phone is intelligently locked. Otherwise, if the user taps "Cancel", the mobile phone is not intelligently locked. Alternatively, the third prompt interface may include an option "Yes". If the user taps "Yes", the mobile phone is intelligently locked. Otherwise, if the user does not tap "Yes", the mobile phone is not intelligently locked.

In another embodiment of this application, if the intelligent locking use condition is met, after intelligent locking is performed on the mobile phone, the smartwatch sends prompt information for determining whether to cancel intelligent locking.

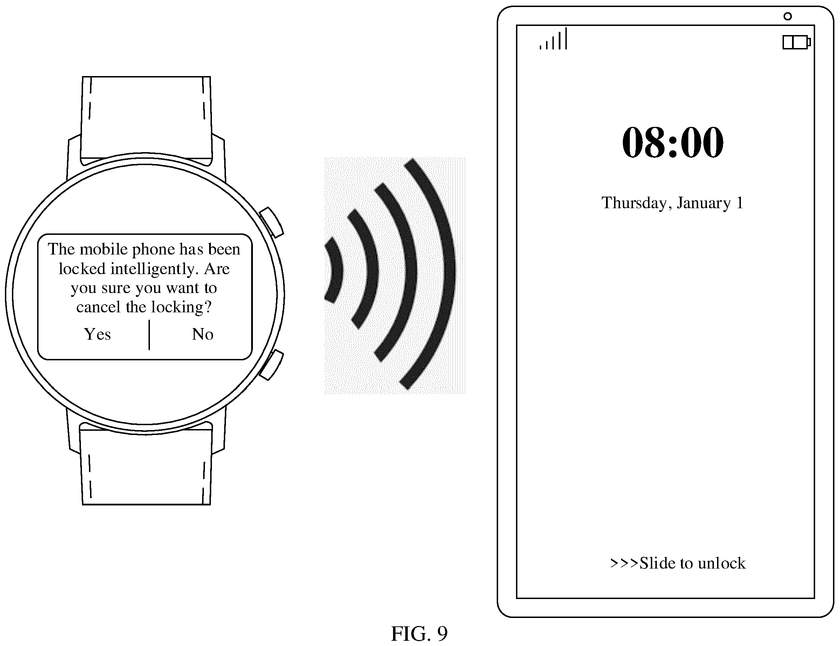

FIG. 9 is a schematic diagram in which after intelligent locking is performed on a mobile phone, a smartwatch sends an information prompt for determining whether to cancel intelligent locking. Refer to FIG. 9. When the intelligent locking use condition is met, the mobile phone is intelligently locked, and the smartwatch sends the information prompt for determining whether to cancel intelligent locking. After the mobile phone is intelligently locked, the smartwatch may display a fourth prompt interface. The fourth prompt interface may include prompt information "The mobile phone has been locked intelligently. Are you sure you want to cancel the unlocking?", and may further include two options "Yes" and "No". If the user taps "Yes", the intelligent locking of the mobile phone is canceled. Otherwise, if the user taps "No", the intelligent locking of the mobile phone is maintained. Alternatively, the fourth prompt interface may include an option "Yes". If the user taps "Yes", the intelligent locking of the mobile phone is canceled. Otherwise, if the user does not tap "Yes", the intelligent locking of the mobile phone is maintained.

According to the electronic device control method provided in this embodiment of this application, after intelligent unlocking is performed on the mobile phone, it is determined whether the intelligent unlocking use condition is not met, and if the intelligent unlocking use condition is not met, the device is re-locked. In this application, security of intelligent unlocking can be improved, and a security risk caused by intelligent unlocking in a non-secure use scenario can be avoided.

FIG. 10 is a detailed flowchart in which a mobile phone detects whether an intelligent unlocking/intelligent locking use condition is met (as shown in 203/205 in FIG. 2).

1001: The mobile phone sends a watch data query request to a smartwatch.

If detecting whether an intelligent unlocking use condition is met, the mobile phone may send a first watch data query request. If detecting whether an intelligent locking use condition is met, the mobile phone may send a second watch data query request.

The mobile phone may send, to the smartwatch, a watch data query request that carries the intelligent unlocking/intelligent locking use condition or a query item. The watch may return corresponding watch data based on the intelligent unlocking/intelligent locking use condition or the query item carried in the watch data query request.

Alternatively, the mobile phone may send, to the smartwatch, a watch data query request that does not carry the intelligent unlocking/intelligent locking use condition or a query item. The watch can return all the watch data to the mobile phone.

1002: The smartwatch returns the watch data to the mobile phone in response to the watch data query request.

If the first watch data query request of the mobile phone is received, the smartwatch may return first device information to the mobile phone. If the second watch data query request of the mobile phone is received, the smartwatch may return second device information to the mobile phone. Both the first device information and the second device information are information including the watch data.

In an embodiment of this application, the watch data returned by the smartwatch may include Bluetooth signal strength and wearing information of the smartwatch, whether the smartwatch is unlocked and password-protected, and a speed, a heart rate, ambient brightness, an ambient sound, and the like sensed by the smartwatch.

1003: The mobile phone obtains mobile phone data.

In an embodiment of this application, the mobile phone data may include Bluetooth signal strength of the mobile phone, a distance between the mobile phone and the smartwatch, and a speed, atmospheric pressure, a distance from the smartwatch, ambient brightness, an ambient sound, and the like sensed by the mobile phone.

1004: The mobile phone determines, based on the watch data and/or the mobile phone data, whether the intelligent unlocking/intelligent locking use condition is met.

For example, if the intelligent unlocking use condition includes Bluetooth signal strength, a wearing status of an unlocking device, and the unlocking device having been unlocked and password-protected, it is determined whether Bluetooth signal strength of the mobile phone and/or the smartwatch is greater than or equal to preset strength, whether the smartwatch is in a worn state, and whether the smartwatch is unlocked and password-protected.

If the smartwatch detects whether the intelligent unlocking/intelligent locking use condition is met, the smartwatch may send a mobile phone data query request to the mobile phone. In response to the mobile phone data query request, the mobile phone returns the mobile phone data to the mobile phone. The smartwatch obtains the watch data, and determines, based on the watch data and/or the mobile phone data, whether the intelligent unlocking/intelligent locking use condition is met.

FIG. 11 is a schematic diagram of an application scenario of an electronic device control method according to another embodiment of this application.

The electronic device control method provided in this embodiment of this application is applied to a vehicle 110 and a mobile phone 111. The vehicle 110 includes a vehicle-mounted computer 1111, a door lock control system 1112, and a door 1113. The mobile phone 111 is an unlocking device of the door 1113, and is configured to perform intelligent unlocking and intelligent locking on the door 1103. According to the electronic device control method provided in this embodiment of this application, when the mobile phone 111 is connected (for example, connected through Bluetooth) to the vehicle-mounted computer 1111 and meets an intelligent door unlocking use condition, intelligent unlocking is performed on the door 1113. After intelligent unlocking is performed on the door 1113, if an intelligent door locking use condition is met, intelligent locking is performed on the door 1113. According to the electronic device control method provided in this embodiment of this application, security of intelligent door unlocking can be improved, and a security risk caused by intelligent unlocking in a non-secure use scenario (for example, the door 1113 is unlocked after the vehicle 110 is started) can be avoided.

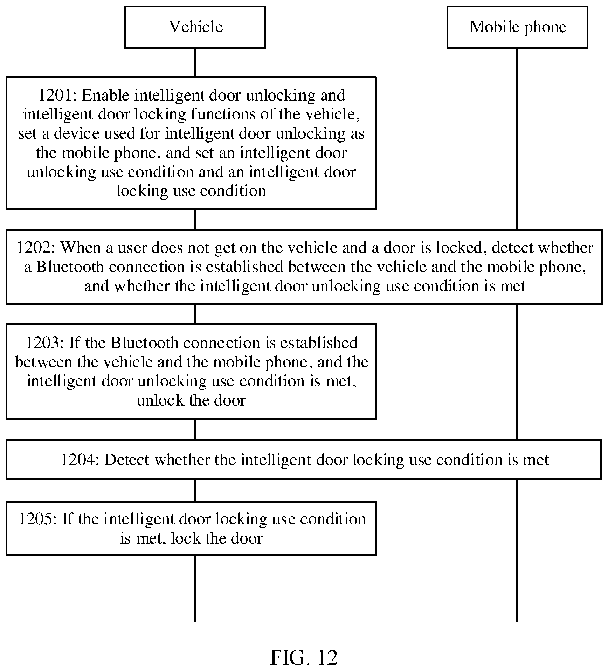

FIG. 12 is a flowchart of an electronic device control method according to another embodiment of this application. The electronic device control method provided in this embodiment of this application is applied to a vehicle and a mobile phone. The vehicle may perform steps in the figure by using a vehicle-mounted computer.

1201: Enable intelligent door unlocking and intelligent door locking functions of the vehicle, set a device used for intelligent door unlocking as the mobile phone, and set an intelligent door unlocking use condition and an intelligent door locking use condition.

The intelligent door unlocking use condition may include any one or more of the following: Bluetooth signal strength, a wearing status of an unlocking device, the unlocking device having been unlocked and password-protected, a distance between the unlocking device and the vehicle, and a speed of the vehicle.

The intelligent door locking use condition may include any one or more of the following: a Bluetooth connection status, Bluetooth signal strength, the wearing status of the unlocking device, the distance between the unlocking device and the vehicle, and the speed of the vehicle.

1202: When a user does not get on the vehicle and a door is locked, detect whether a Bluetooth connection is established between the vehicle and the mobile phone, and whether the intelligent door unlocking use condition is met.

In this embodiment, the mobile phone intelligently unlocks the door by using a Bluetooth connection. In this step, it is detected whether the Bluetooth connection is established between the vehicle and the mobile phone. In another embodiment of this application, the mobile phone may intelligently unlock the door by using another short-range wireless communication connection. In this step, it is detected whether the another short-range wireless communication connection is established between the vehicle and the mobile phone.

The detecting whether the intelligent door unlocking use condition is met is performing determining based on the intelligent door unlocking use condition set in 1201. For example, if the intelligent door unlocking use condition includes the Bluetooth signal strength, the unlocking device having been unlocked and password-protected, the distance between the unlocking device and a vehicle, and the speed of the vehicle, it is detected whether Bluetooth signal strength of the vehicle and/or the mobile phone is greater than or equal to preset strength, whether the mobile phone is unlocked and password-protected, whether the distance between the mobile phone and the vehicle is less than or equal to a preset distance, and whether the speed of the vehicle is zero.

In an embodiment of this application, the mobile phone may detect whether the Bluetooth connection is established between the vehicle and the mobile phone, and whether the intelligent door unlocking use condition is met.

If the mobile phone detects whether the intelligent door unlocking use condition is met, the mobile phone may send a vehicle data query request to the vehicle. In response to the vehicle data query request, the vehicle returns vehicle data to the mobile phone. The mobile phone obtains mobile phone data, and determines, based on the vehicle data and/or the mobile phone data, whether an intelligent unlocking/intelligent locking use condition is met.

In another embodiment of this application, the vehicle may detect whether the Bluetooth connection is established between the vehicle and the mobile phone, and whether the intelligent door unlocking use condition is met.

If the vehicle detects whether the intelligent door unlocking use condition is met, the vehicle may send a mobile phone data query request to the mobile phone. In response to the mobile phone data query request, the mobile phone returns the mobile phone data to the vehicle. The vehicle further obtains the vehicle data, and determines, based on the mobile phone data and/or the vehicle data, whether the intelligent door unlocking/intelligent door locking use condition is met.

1203: If it is detected that the Bluetooth connection is established between the vehicle and the mobile phone, and the intelligent door unlocking use condition is met, unlock (that is, intelligently unlock) the door by using a door lock control system.

If the mobile phone detects whether the Bluetooth connection is established between the vehicle and the mobile phone, and whether the intelligent door unlocking use condition is met, when detecting that the Bluetooth connection is established between the vehicle and the mobile phone and the intelligent door unlocking use condition is met, the mobile phone may send a door unlocking instruction to the vehicle, and the vehicle unlocks the door according to the door unlocking instruction.

In an embodiment of this application, if it is detected that the Bluetooth connection is established between the vehicle and the mobile phone, and the intelligent door unlocking use condition is met, before intelligent unlocking is performed on the door, the mobile phone sends prompt information for determining whether to perform intelligent unlocking on the door.

In another embodiment of this application, if it is detected that the Bluetooth connection is established between the vehicle and the mobile phone, and the intelligent door unlocking use condition is met, after intelligent unlocking is performed on the door, the mobile phone sends prompt information for determining whether to cancel intelligent unlocking of the door.

1204: Detect whether the intelligent door locking use condition is met.

For example, if the intelligent door locking use condition includes a Bluetooth connection status, the Bluetooth signal strength, the distance between the unlocking device and the vehicle, and the speed of the vehicle, it is detected whether a Bluetooth connection between the vehicle and the mobile phone is disconnected, whether the Bluetooth signal strength of the vehicle and/or the mobile phone is less than the preset strength, whether the distance between the mobile phone and the vehicle is greater than the preset distance, and whether the speed of the vehicle is greater than zero.

The mobile phone may detect whether the intelligent door locking use condition is met. Alternatively, the vehicle may detect whether the intelligent door locking use condition is met.

1205: If the intelligent door locking use condition is met, lock (that is, intelligently lock) the door by using the door lock control system.

For example, the intelligent door locking use condition includes the Bluetooth connection status, the Bluetooth signal strength, the distance between the unlocking device and the vehicle, and the speed of the vehicle. If the Bluetooth connection between the vehicle and the mobile phone is disconnected, the Bluetooth signal strength of the vehicle and/or the mobile phone is less than the preset strength, the distance between the mobile phone and the vehicle is greater than the preset distance, or the speed of the vehicle is greater than zero, the intelligent door locking use condition is met, and the door is locked.

If the mobile phone detects whether the intelligent door locking use condition is met, when the intelligent door locking use condition is met, the mobile phone may send a door locking instruction to the vehicle, and the vehicle locks the door according to the door locking instruction.

In an embodiment of this application, if the intelligent door locking use condition is met, before intelligent locking is performed on the door, the mobile phone sends prompt information for determining whether to perform intelligent locking on the door.

In another embodiment of this application, if the intelligent door locking use condition is met, after intelligent locking is performed on the door, the mobile phone sends prompt information for determining whether to cancel intelligent locking of the door.

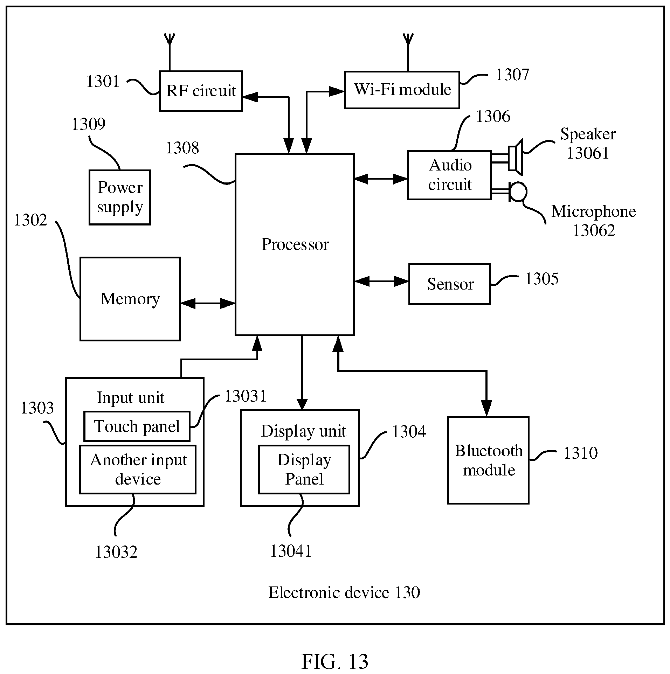

FIG. 13 is a schematic diagram of a structure of an electronic device (a first electronic device or a second electronic device, and for example, the electronic device is a terminal in the figure) according to an embodiment of this application. As shown in FIG. 13, an electronic device 130 may include components such as a radio frequency (Radio Frequency, RF) circuit 1301, a memory 1302, an input unit 1303, a display unit 1304, a sensor 1305, an audio circuit 1306, a Wi-Fi module 1307, a processor 1308, a power supply 1309, and a Bluetooth module 1310. A person skilled in the art may understand that the structure shown in FIG. 13 constitutes no limitation on the electronic device, and the electronic device may include more or fewer components than those shown in the figure, or combine some components, or have different component arrangements.

The RF circuit 1301 may be configured to receive and send signals in a process of receiving and sending information or in a call process. Particularly, after receiving downlink information of a base station, the RF circuit 1301 delivers the downlink information to the processor 1308 for processing, and sends uplink data to the base station. Usually, the RF circuit 1301 includes but is not limited to an antenna, at least one amplifier, a transceiver, a coupler, a low noise amplifier (Low Noise Amplifier, LNA), a duplexer, and the like.

The memory 1302 may be configured to store a software program and a module. The processor 1308 runs the software program and the module that are stored in the memory 1302, to execute various functional applications of the electronic device and perform data processing. The memory 1302 may mainly include a program storage area and a data storage area. The program storage area may store an operating system, an application required by at least one function (such as a sound playing function and an image playing function), and the like. The data storage area may store data (such as audio data and a phone book) created based on use of the electronic device, and the like. In addition, the memory 1302 may include a high-speed random access memory, and may further include a non-volatile memory such as at least one disk storage device, a flash memory device, or another volatile solid-state storage device.

The input unit 1303 may be configured to receive entered digital or character information, and generate a key signal input related to a user setting and function control of the electronic device. Specifically, the input unit 1303 may include a touch panel 13031 and another input device 13032. The touch panel 13031, also referred to as a touchscreen, may collect a touch operation (for example, an operation performed by a user on the touch panel 13031 or near the touch panel 13031 by using any proper object or accessory such as a finger or a stylus) performed by the user on or near the touch panel 13031, and drive a corresponding connection apparatus based on a preset program. Optionally, the touch panel 13031 may include two parts: a touch detection apparatus and a touch controller. The touch detection apparatus detects a touch orientation of the user, detects a signal brought by the touch operation, and transfers the signal to the touch controller. The touch controller receives touch information from the touch detection apparatus, converts the touch information into touch point coordinates, then sends the touch point coordinates to the processor 1308, and receives and executes a command sent from the processor 1308. In addition, the touch panel 13031 may be implemented by using a plurality of types, such as a resistive type, a capacitive type, an infrared ray type, and a surface acoustic wave type. In addition to the touch panel 13031, the input unit 1303 may include the another input device 13032. Specifically, the another input device 13032 may include but be not limited to one or more of a physical keyboard, a functional key (such as a volume control key or an on/off key), a trackball, a mouse, or a joystick.

The display unit 1304 may be configured to display information entered by the user or information provided for the user, and various menus of the electronic device. The display unit 1304 may include a display panel 13041. Optionally, the display panel 13041 may be configured in a form of a liquid crystal display (Liquid Crystal Display, LCD), an organic light-emitting diode (Organic Light-Emitting Diode, OLED), or the like. Further, the touch panel 13031 may cover the display panel 13041. When detecting a touch operation on or near the touch panel 13031, the touch panel 13031 transfers the touch operation to the processor 1308 to determine a type of a touch event, and then the processor 1308 provides a corresponding visual output on the display panel 13041 based on the type of the touch event. Although the touch panel 13031 and the display panel 13041 are used as two independent parts in FIG. 13 to implement input and output functions of the electronic device, in some embodiments, the touch panel 13031 and the display panel 13041 may be integrated to implement the input and output functions of the electronic device.

The electronic device may further include at least one sensor 1305, for example, a light sensor, a motion sensor, and another sensor. Specifically, the light sensor may include an ambient light sensor and a proximity sensor. The ambient light sensor may adjust luminance of the display panel 13041 based on brightness of ambient light. The proximity sensor may turn off the display panel 13041 and/or backlight when the electronic device moves to an ear. As a type of the motion sensor, an accelerometer sensor may detect values of acceleration in all directions (usually, three axes), may detect a value and a direction of gravity when the accelerometer sensor is static, and may be used in an application for recognizing a posture (such as switching between landscape mode and portrait mode, a related game, or magnetometer posture calibration) of the electronic device, a function related to vibration recognition (such as a pedometer or a knock), or the like. In addition, other sensors such as a gyroscope, a barometer, a hygrometer, a thermometer, or an infrared sensor may be further configured in the electronic device. Details are not described herein.

The audio circuit 1306, a speaker 13061, and a microphone 13062 may provide an audio interface between the user and the electronic device. The audio circuit 1306 may convert received audio data into an electrical signal and then transmit the electrical signal to the speaker 13061, and the speaker 13061 converts the electrical signal into a sound signal for output. In addition, the microphone 13062 converts a collected sound signal into an electrical signal. The audio circuit 1306 receives the electrical signal, converts the electrical signal into audio data, and then outputs the audio data to the processor 1308 for processing, to send the audio data to, for example, another electronic device through the RF circuit 1301, or outputs the audio data to the memory 1302 for further processing.

Wi-Fi belongs to a short distance wireless transmission technology. The electronic device may help, by using the Wi-Fi module 1307, the user receive and send an email, browse a web page, access streaming media, and the like. This provides wireless broadband internet access for the user. Although FIG. 13 shows the Wi-Fi module 1307, it may be understood that the Wi-Fi module 1307 is not a mandatory component of the electronic device, and may be omitted based on a requirement without changing the essence of the present invention.

The processor 1308 is a control center of the electronic device. The processor 1308 is connected to all parts of the entire electronic device by using various interfaces and lines, and performs various functions of the electronic device and data processing by running or executing the software program and/or the module stored in the memory 1302 and invoking data stored in the memory 1302, to perform overall monitoring on the electronic device.

The processor 1308 may include one or more processing units. For example, the processor 1308 may include an application processor (application processor, AP), a micro control unit (micro control unit, MCU), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor 1308 may integrate an application processor and a modem. The application processor mainly processes an operating system, a user interface, an application, and the like. The modem mainly processes wireless communication. It may be understood that the modem processor may not be integrated into the processor 1308.

The electronic device further includes the power supply 1309 (for example, a battery) that supplies power to the components. Optionally, the power supply may be logically connected to the processor 1308 by using a power management system, to implement functions, such as charge management, discharge management, and power consumption management, by using the power management system.

The Bluetooth module 1310 is a Bluetooth chip, and the Bluetooth module 1310 communicates, by using a Bluetooth protocol, with another electronic device having a Bluetooth function.

Although not shown, the electronic device 130 may further include a camera and the like. Details are not described herein.

The electronic device described in FIG. 13 may be configured to implement some or all procedures in embodiments of this application. For details, refer to related descriptions in the foregoing embodiments. Details are not described herein again.

This embodiment further provides a computer storage medium. The computer storage medium stores a computer instruction. When the computer instruction runs on an electronic device, the electronic device is enabled to perform the foregoing related method steps to implement the electronic device control method in the foregoing embodiment.

This embodiment further provides a computer program product. When the computer program product runs on an electronic device, the electronic device is enabled to perform the related steps, to implement the electronic device control method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the electronic device control method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division. During actual implementation, another division manner may be used. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. A part displayed as a unit may be one or more physical units, that is, may be located in one place, or may be distributed in a plurality of different places. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in a form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An electronic device control method, applied to a system comprising a first electronic device and a second electronic device, wherein the method comprises:
when the first electronic device is in a locked state, detecting whether the first electronic device establishes a short-range wireless communication connection to the second electronic device, and whether an intelligent unlocking use condition is met;
if the first electronic device establishes the short-range wireless communication connection to the second electronic device, and the intelligent unlocking use condition is met, unlocking the first electronic device by using the second electronic device;
detecting whether an intelligent locking use condition is met; and
if the intelligent locking use condition is met, locking the first electronic device.

2. The electronic device control method according to claim 1, wherein the method further comprises:
if a first user operation is received, displaying an intelligent unlocking and/or intelligent locking setting interface, wherein the intelligent unlocking and/or intelligent locking setting interface is used to set an intelligent unlocking and/or intelligent locking function of the first electronic device.

3. The electronic device control method according to claim 1, wherein the method further comprises:
if a second user operation on the intelligent unlocking and/or intelligent locking setting interface is received, displaying an intelligent unlocking and/or intelligent locking use condition setting interface, wherein the intelligent unlocking and/or intelligent locking use condition setting interface is used to set the intelligent unlocking use condition and/or the intelligent locking use condition.

4. The electronic device control method according to any one of claims 1 to 3, wherein the intelligent unlocking use condition and the intelligent locking use condition correspond to a same condition option.

5. The electronic device control method according to any one of claims 1 to 3, wherein the intelligent unlocking use condition and the intelligent locking use condition correspond to different condition options.

6. The electronic device control method according to any one of claims 1 to 5, wherein the locking the first electronic device is specifically:
locking the first electronic device by using the second electronic device; or
locking, by the first electronic device, the first electronic device.

7. The electronic device control method according to any one of claims 1 to 6, wherein the first electronic device and the second electronic device are terminals.

8. The electronic device control method according to claim 7, wherein the first electronic device is a mobile phone or a tablet, and the second electronic device is a wearable device.

9. The electronic device control method according to claim 7, wherein the detecting whether the intelligent locking use condition is met specifically comprises:
before the first electronic device is screen-off, detecting whether the intelligent locking use condition is met.

10. The electronic device control method according to any one of claims 7 to 9, wherein the intelligent unlocking use condition comprises any one or more of the following: short-range wireless communication signal strength of the first electronic device and/or the second electronic device, a wearing status of the second electronic device, the second electronic device having been unlocked and password-protected, a distance between the first electronic device and the second electronic device, and a speed, atmospheric pressure, a heart rate, ambient brightness, and an ambient sound sensed by the first electronic device and/or the second electronic device; and
the intelligent unlocking use condition comprises any one or more of the following: a connection status of short-range wireless communication between the first electronic device and the second electronic device, short-range wireless communication signal strength of the first electronic device and/or the second electronic device, a wearing status of an unlocking device of the second electronic device, a distance between the first electronic device and the second electronic device, and a speed, atmospheric pressure, a heart rate, ambient brightness, and an ambient sound sensed by the first electronic device and/or the second electronic device.

11. The electronic device control method according to any one of claims 1 to 6, wherein the first electronic device is a vehicle, the second electronic device is a terminal, and the unlocking the first electronic device is specifically:
unlocking a door of the vehicle; and
the locking the first electronic device is specifically:
locking the door.

12. The electronic device control method according to claim 11, wherein the intelligent unlocking use condition comprises any one or more of the following: short-range wireless communication signal strength of the vehicle and/or the terminal, a wearing status of the terminal, the terminal having been unlocked and password-protected, a distance between the vehicle and the terminal, and a speed of the vehicle; and
the intelligent locking use condition comprises any one or more of the following: a connection status of short-range wireless communication between the vehicle and the terminal, short-range wireless communication signal strength of the vehicle and/or the terminal, a wearing status of the terminal, a distance between the vehicle and the terminal, and a speed of the vehicle.

13. An electronic device control method, applied to a first electronic device, wherein the method comprises:
when the first electronic device is in a locked state, detecting whether the first electronic device establishes a short-range wireless communication connection to a second electronic device, and whether an intelligent unlocking use condition is met;
if the first electronic device establishes the short-range wireless communication connection to the second electronic device, and the intelligent unlocking use condition is met, unlocking the first electronic device by using the second electronic device;
detecting whether an intelligent locking use condition is met; and
if the intelligent locking use condition is met, locking the first electronic device.

14. An electronic device control method, applied to a second electronic device, wherein the second electronic device is an unlocking device of a first electronic device, and the method comprises:
after the first electronic device enters a locked state and establishes a short-range wireless communication connection to the first electronic device, returning first device information of the second electronic device to the first electronic device, to detect whether the first electronic device meets an intelligent unlocking use condition, and when the first electronic device establishes the short-range wireless communication connection to the second electronic device and meets the intelligent unlocking use condition, performing intelligent unlocking on the first electronic device by using the second electronic device; and
after intelligent unlocking is performed on the first electronic device, returning second device information of the second electronic device to the first electronic device, to detect whether detection of an intelligent locking use condition is met, and when the first electronic device meets the intelligent locking use condition, performing intelligent locking on the first electronic device.

15. The electronic device control method according to claim 14, wherein the first device information and the second device information comprise any one or more of the following: short-range wireless communication signal strength of the first electronic device and/or the second electronic device, a wearing status of the second electronic device, whether the second electronic device is unlocked and whether the second electronic device is password-protected, a distance between the first electronic device and the second electronic device, and a speed, atmospheric pressure, a heart rate, ambient brightness, and an ambient sound sensed by the second electronic device.

16. The electronic device control method according to claim 14 or 15, wherein before the performing intelligent unlocking on the first electronic device, the method further comprises:
sending an information prompt for determining whether to intelligently unlock the first electronic device.

17. The electronic device control method according to claim 14 or 15, wherein after the performing intelligent unlocking on the first electronic device, the method further comprises:
sending an information prompt for determining whether to cancel intelligent unlocking of the first electronic device.

18. The electronic device control method according to claim 14 or 15, wherein before the performing intelligent locking on the first electronic device, the method further comprises:
sending an information prompt for determining whether to intelligently lock the first electronic device.

19. The electronic device control method according to claim 14 or 15, wherein after the performing intelligent locking on the first electronic device, the method further comprises:
sending an information prompt for determining whether to cancel intelligent locking of the first electronic device.

20. A computer-readable storage medium, comprising computer instructions, wherein when the computer instructions are run on an electronic device, the electronic device is enabled to perform the electronic device control method according to any one of claims 1 to 12, claim 13, or any one of claims 14 to 19.

21. An electronic device, wherein the electronic device comprises a processor and a memory, the memory is configured to store instructions, and the processor is configured to invoke the instructions in the memory, so that the electronic device is enabled to perform the electronic device control method according to any one of claims 1 to 12, claim 13, or any one of claims 14 to 19.

22. A chip system, wherein the chip system is used in an electronic device, the chip system comprises an interface circuit and a processor, the interface circuit and the processor are interconnected through a line, the interface circuit is configured to receive a signal from a memory of the electronic device, and send a signal to the processor, the signal comprises computer instructions stored in the memory, and when the processor executes the computer instructions, the chip system performs the electronic device control method according to any one of claims 1 to 12, claim 13, or any one of claims 14 to 19.
